# EUROPEAN PATENT APPLICATION

(11) **EP 3 960 639 A1**
(43) Date of publication of application: **02.03.2022**
(21) Application number: 20795718.4
(22) Date of filing: 24.04.2020
(51) Int. Cl.: B64G 1/64

(54) **NOSE FAIRING**

(30) Priority: 26.04.2019 JP 2019085492
(71) Applicant: Kawasaki Jukogyo Kabushiki Kaisha, Hyogo 650-8670 (JP)
(72) Inventor: KODA, Kenichi, Chuo-ku, Kobe-shi Hyogo 650-8670 (JP); HORIE, Yoichi, Chuo-ku, Kobe-shi Hyogo 650-8670 (JP)
(74) Representative: Leinweber & Zimmermann
(86) International application number: PCT/JP2020/017816
(87) International publication number: WO 2020/218569

(57) **Abstract**

A nose fairing (10) is a nose fairing coupled to a main body portion (12) of a rocket (11) so as to be separable from the main body portion. The nose fairing includes: a pair of fairing pieces (40, 50) that are separable after a predetermined time has elapsed since the rocket is launched, the pair of fairing pieces being engaged with each other and maintained in a coupled state before the pair of fairing pieces separate; a biasing structure (60) that biases the fairing pieces in a proceeding direction of the rocket to separate the fairing pieces from the main body portion; and a separating mechanism (13) that releases the engagement between the pair of fairing pieces and separates the pair of fairing pieces in such a manner that a distance of separation of one of the pair of fairing pieces from the main body portion is made longer than a distance of separation of the other of the pair of fairing pieces from the main body portion.

## Description

### Technical Field

The present disclosure relates to a nose fairing, particularly to a fairing separating mechanism.

### Background Art

Known as a conventional fairing separating mechanism is a coupling-separating mechanism for a rocket fairing described in PTL 1. According to this coupling-separating mechanism, a pair of half shells formed by dividing the fairing into two parts in a vertical direction are coupled to each other by fastening bolts and nuts. Then, the fastening is released by a pyrotechnic system, and thus, the pair of half shells separate from each other.

### Citation List

### Patent Literature

PTL 1: Japanese Laid-Open Patent Application Publication No. 2014-037166

### Summary of Invention

### Technical Problem

According to the coupling-separating mechanism of PTL 1, when the fairing separates, shock generated by the pyrotechnic system, such as an explosive, may act on a rocket main body and a payload accommodated in the fairing.

The present disclosure was made to solve the above problem, and an object of the present disclosure is to provide a nose fairing capable of reducing shock generated at the time of separation.

### Solution to Problem

A nose fairing according to one aspect of the present disclosure is a nose fairing coupled to a main body portion of a rocket so as to be separable from the main body portion. The nose fairing includes: a pair of fairing pieces that are separable after a predetermined time has elapsed since the rocket is launched, the pair of fairing pieces being engaged with each other and maintained in a coupled state before the pair of fairing pieces separate; a biasing structure that biases the fairing pieces in a proceeding direction of the rocket to separate the fairing pieces from the main body portion; and a separating mechanism that releases the engagement between the pair of fairing pieces and separates the pair of fairing pieces in such a manner that a distance of separation of one of the pair of fairing pieces from the main body portion is made longer than a distance of separation of the other of the pair of fairing pieces from the main body portion.

### Advantageous Effects of Invention

The present disclosure includes the above configuration and has an effect of being able to provide a nose fairing capable of reducing shock generated at the time of separation.

The above object, other objects, features, and advantages of the present disclosure will be made clear by the following detailed explanation of preferred embodiments with reference to the attached drawings.

### Brief Description of Drawings

FIG. 1 is a diagram showing a nose fairing according to an embodiment of the present disclosure when viewed from one side in a third direction.
FIG. 2 is a diagram showing that a pair of fairing pieces shown in FIG. 1 are biased by a biasing structure.
FIG. 3 is a diagram showing that the pair of fairing pieces shown in FIG. 2 separate from each other.
FIG. 4 is a sectional view schematically showing the nose fairing of FIG. 1.
FIG. 5 is a diagram showing the nose fairing according to Modified Example 2 of the embodiment of the present disclosure when viewed from one side in the third direction.

### Description of Embodiments

A nose fairing according to one aspect of the present disclosure is a nose fairing coupled to a main body portion of a rocket so as to be separable from the main body portion. The nose fairing includes: a pair of fairing pieces that are separable after a predetermined time has elapsed since the rocket is launched, the pair of fairing pieces being engaged with each other and maintained in a coupled state before the pair of fairing pieces separate; a biasing structure that biases the fairing pieces in a proceeding direction of the rocket to separate the fairing pieces from the main body portion; and a separating mechanism that releases the engagement between the pair of fairing pieces and separates the pair of fairing pieces in such a manner that a distance of separation of one of the pair of fairing pieces from the main body portion is made longer than a distance of separation of the other of the pair of fairing pieces from the main body portion. According to this configuration, shock generated when separating the fairing can be reduced.

In the nose fairing, the separating mechanism includes a rotary structure that rotates the pair of fairing pieces about corresponding hinge shafts to open and separate the pair of fairing pieces after the pair of fairing pieces receive biasing force from the biasing structure to separate from the main body portion in the proceeding direction.

In the nose fairing, one of the pair of fairing pieces includes first engaging portions at a side end portion thereof, the first engaging portions each having a hook shape that is bent in the proceeding direction, and the other of the pair of fairing pieces includes second engaging portions at a side end portion thereof, the first engaging portions being engaged with the second engaging portions.

According to this configuration, the biasing structure pushes up the pair of fairing pieces such that the movement distances of the pair of fairing pieces are different from each other. With this, the engagement between the fairing pieces can be released, and thus, the fairing pieces can separate from each other. As above, shock generated at the time of the separation can be made smaller than that generated by a general separating method using a pyrotechnic system.

In the nose fairing, when one of the pair of fairing pieces moves relative to the other of the pair of fairing pieces in the proceeding direction from a state where the first engaging portions are engaged with the second engaging portions and are therefore restricted from moving relative to the second engaging portions in an orthogonal direction orthogonal to the proceeding direction, the first engaging portions are disengaged from the second engaging portions and are therefore movable relative to the second engaging portions in the orthogonal direction.

In the nose fairing, in a sectional shape of the nose fairing in a side view, the nose fairing includes an inflection point at which an inclination angle of the nose fairing to the proceeding direction becomes small toward the main body portion, and an interval between adjacent two of the first engaging portions lined up along the side end portion of the fairing piece becomes narrower as the adjacent two of the first engaging portions are located closer to the inflection point.

Force which is generated by air flow during the flight of the rocket and separates a pair of fairing pieces from each other strongly acts at the inflection point of the fairing. However, according to the present disclosure, since the number of first engaging portions becomes larger at a position closer to the inflection point, the pair of fairing pieces can be prevented from separating.

In the nose fairing, each of the second engaging portions has a hook shape that is bent in a direction opposite to a direction in which the first engaging portion is bent along the proceeding direction.

According to the present disclosure, the first engaging portion is engaged with the second engaging portion in the second direction. Moreover, when the first engaging portion is displaced relative to the second engaging portion in the first direction, the first engaging portion is disengaged from the second engaging portion.

In the nose fairing, each of the first engaging portions includes a first bent portion that is bent toward one side in the proceeding direction. Each of the second engaging portions includes a second bent portion that is bent toward the other side in the proceeding direction. A surface of the first bent portion which surface is opposed to the second bent portion is not inclined so as to approach the side end portion as the surface of the first bent portion extends toward an opposite side of the main body portion in the proceeding direction.

According to the present disclosure, since the first engaging portion is not engaged with the second engaging portion in the first direction, the first engaging portion can be displaced relative to the second engaging portion in the first direction and can be disengaged from the second engaging portion.

In the nose fairing, the first engaging portions are located symmetrically with respect to a central axis of the nose fairing.

According to the present disclosure, the pair of fairing pieces can be uniformly joined to each other by the first engaging portions.

Hereinafter, an embodiment of the present disclosure will be specifically described with reference to the drawings. In the following description and the drawings, the same reference signs are used for the same or corresponding components, and the repetition of the same explanation is avoided.

### Embodiment

### Configuration of Nose Fairing

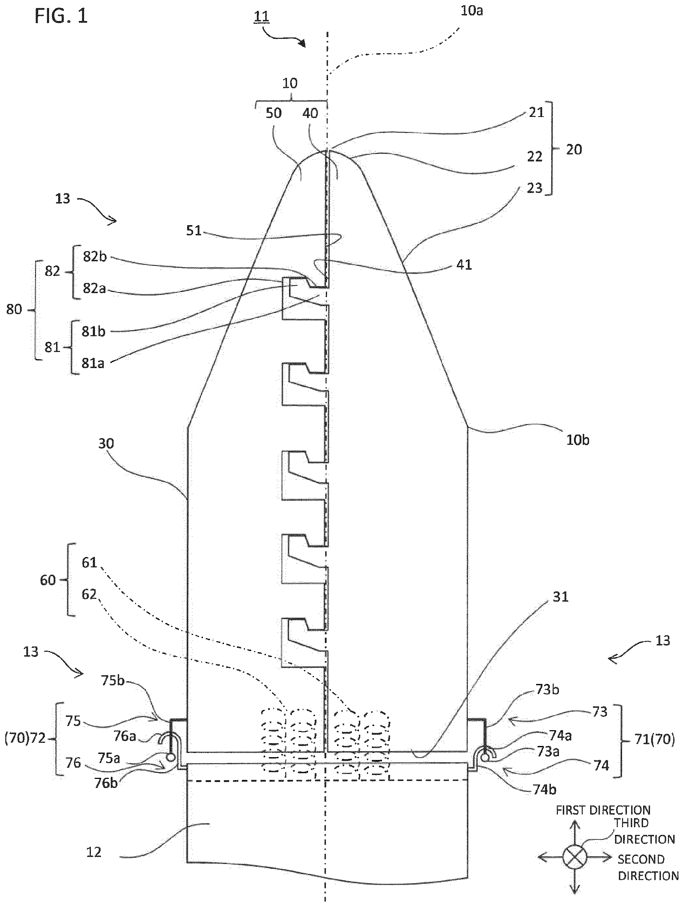

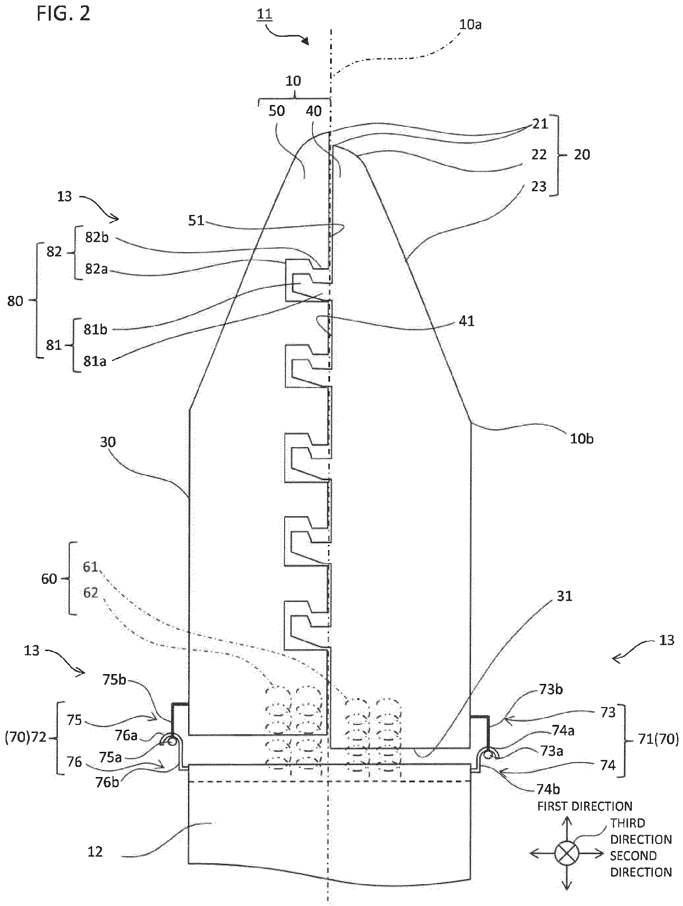

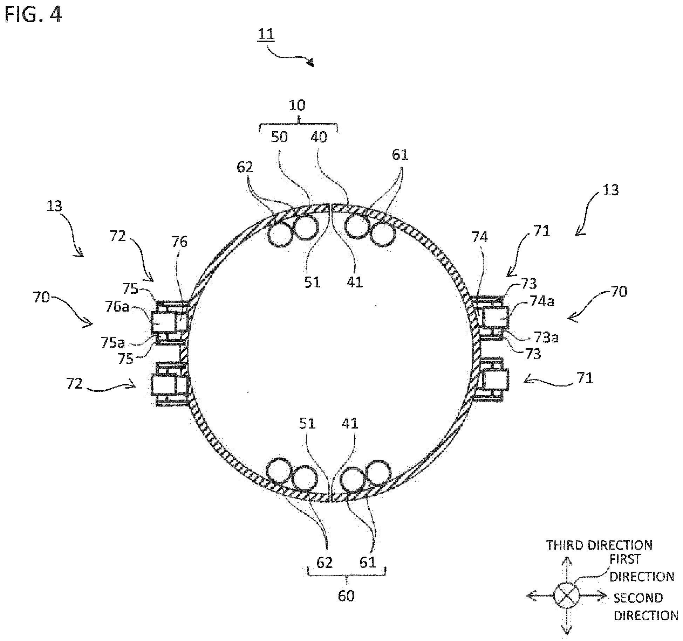

A nose fairing 10 according to the present embodiment will be described with reference to FIGS. 1 to 4. FIGS. 1 to 3 are side views of the nose fairing 10, and FIG. 4 is a sectional view of the nose fairing 10. Herein, a first direction is a paper surface upper-lower direction, i.e., a proceeding direction of a rocket 11. A second direction is a paper surface left-right direction, i.e., a radial direction of the fairing 10. A third direction is a paper surface normal direction, i.e., the radial direction of the nose fairing 10. Hereinafter, the nose fairing 10 is simply called the fairing 10.

The fairing 10 is a part located at a foremost end portion of the rocket 11 and includes therein a space accommodating a payload, such as a satellite. The fairing 10 includes a head portion 20 and a body portion 30. A fore end portion 21 of the head portion 20 is closed, and a terminal end portion 31 of the body portion 30 is open.

The fairing 10 is divided into two equal parts that are a pair of fairing pieces (a first fairing piece 40 and a second fairing piece 50) and separates when the rocket 11 reaches an adequate altitude.

The fairing 10 includes two separating mechanisms. To be specific, a fairing separating mechanism includes: a mechanism (bending separating mechanism) by which the fairing 10 separates from a main body portion 12; and a mechanism (linear separating mechanism 13) by which the first fairing piece 40 and the second fairing piece 50 separate from each other. More specifically, the terminal end portion 31 of the fairing 10 separates from the main body portion 12 of the rocket 11 by the bending separating mechanism, and a first side end portion 41 of the first fairing piece 40 and a second side end portion 51 of the second fairing piece 50 separate from each other by the linear separating mechanism 13. Herein, the terminal end portion 31 is an end portion opposite to the fore end portion 21 of the fairing 10 in the first direction, is orthogonal to the first direction, and has a circular shape. Each of the first side end portion 41 and the second side end portion 51 is an end portion of the fairing 10 in a circumferential direction, is orthogonal to the second direction, and includes a substantially inverted V shape that projects toward the fore end portion 21 in the first direction. Regarding the bending separating mechanism, known technology can be used. Moreover, details of the linear separating mechanism 13 will be described later.

The head portion 20 includes: the fore end portion 21 of the fairing 10; a top portion 22 having a rounded conical shape; and an inclined surface 23 inclined so as to increase in diameter from the top portion 22 toward the body portion 30. The inclined surface 23 is a conical surface and is inclined at a certain angle to a central axis 10a of the fairing 10. The inclined surface 23 may be inclined such that an inclination angle of the inclined surface 23 becomes small as the inclined surface 23 extends toward the body portion 30.

The body portion 30 includes the terminal end portion 31 and is located closer to the main body portion 12 than the head portion 20 is. Moreover, the body portion 30 has a cylindrical shape that is coaxial with the head portion 20 and is connected to the inclined surface 23 of the head portion 20. Therefore, regarding a sectional shape of the body portion 30 in a side view, the body portion 30 is parallel to the central axis 10a of the fairing 10, and an inflection point 10b is located at a portion of the body portion 30 which portion is connected to the head portion 20.

To be specific, in the fairing 10, the inclined surface 23 of the head portion 20 and the body portion 30 are continuous with each other in the first direction. The inclination angle of the inclined surface 23 to the central axis 10a is larger than 0°, and an inclination angle of the body portion 30 to the central axis 10a is 0°. Therefore, the inclination angle of the body portion 30 located closer to the main body portion 12 than the inclined surface 23 is is small, and the fairing 10 includes the inflection point 10b which is located between the inclined surface 23 and the body portion 30 and at which the inclination angle becomes small toward the main body portion 12.

In a state (coupled state) in which the first fairing piece 40 and the second fairing piece 50 are coupled to each other, the first fairing piece 40 and the second fairing piece 50 are formed symmetrically with respect to the central axis 10a in the second direction except for the linear separating mechanism 13. Moreover, the side end portion (first side end portion 41) of the first fairing piece 40 and the side end portion (second side end portion 51) of the second fairing piece 50 are opposed to each other while sandwiching the central axis 10a.

### Configuration of Linear Separating Mechanism

The fairing 10 includes the first fairing piece 40, the second fairing piece 50, a biasing structure 60 that biases the fairing 10 in the first direction, and the linear separating mechanism 13. The linear separating mechanism 13 is a mechanism that divides the fairing 10 into two parts. The linear separating mechanism 13 includes a rotary structure 70 and joint portions 80. The rotary structure 70 rotates the first fairing piece 40 and the second fairing piece 50 around hinges to separate the first fairing piece 40 and the second fairing piece 50. The joint portions 80 maintain the coupling state between the first fairing piece 40 and the second fairing piece 50 before the separation of the first fairing piece 40 and the second fairing piece 50. For example, as shown in FIGS. 1 and 4, the biasing structure 60 includes first springs 61 and second springs 62, the rotary structure 70 includes first hinges 71 and second hinges 72, and the joint portions 80 include first engaging portions 81 and second engaging portions 82.

The first springs 61, the first hinges 71, and the first engaging portions 81 are disposed at the first fairing piece 40, and the second springs 62, the second hinges 72, and the second engaging portions 82 are disposed at the second fairing piece 50.

The first and second springs 61 and 62 of the biasing structure 60 are disposed in the internal space of the fairing 10 so as to be expandable and contractable in the first direction. For example, as shown in FIG. 4, when two first springs 61 disposed adjacent to each other are regarded as a pair, a pair of first springs 61 are disposed at each of the vicinity of one end of the first fairing piece 40 in the circumferential direction and the vicinity of the other end of the first fairing piece 40 in the circumferential direction. Similarly, a pair of second springs 62 are disposed at each of the vicinity of one end of the second fairing piece 50 in the circumferential direction and the other end of the second fairing piece 50 in the circumferential direction.

As shown in FIG. 1, each first spring 61 is disposed such that: one end thereof is fixed to the first fairing piece 40; the other end thereof is in contact with a recess of the main body portion 12; and when the fairing 10 and the main body portion 12 are in a coupled state, the other end thereof presses the recess. Each second spring 62 is disposed similarly with respect to the second fairing piece 50 and the main body portion 12.

As above, the first springs 61 and the second springs 62 are disposed so as to reach the main body portion 12 beyond the terminal end portion 31 of the fairing 10 in the first direction and are disposed so as to sandwich the first side end portion 41 and the second side end portion 51 in the second direction

The rotary structure 70 is a joint which couples the first fairing piece 40 and the second fairing piece 50 to the main body portion 12 such that the first fairing piece 40 and the second fairing piece 50 are separable from the main body portion 12 by being rotated around the hinges. For example, the rotary structure 70 includes a pair of first hinges 71 and a pair of second hinges 72. Moreover, each first hinge 71 includes a first movable portion 73 and a first fixing portion 74. The first movable portion 73 includes a first pin 73a and holding portions 73b, and the first fixing portion 74 includes a first fitting portion 74a and a holding portion 74b. Each second hinge 72 includes a second movable portion 75 and a second fixing portion 76. The second movable portion 75 includes a second pin 75a and holding portions 75b, and the second fixing portion 76 includes a fitting portion 76a and a holding portion 76b.

As shown in FIG. 4, in a sectional view, the pair of first hinges 71 are disposed with an interval therebetween so as to sandwich a middle portion of the first fairing piece 40 in the circumferential direction. The first hinges 71 are disposed at the first fairing piece 40 so as to be located at an opposite side of the first side end portion 41 in the second direction and located at a position farthest away from the first side end portion 41 in the circumferential direction. The second hinges 72 are disposed at the second fairing piece 50 so as to be located at an opposite side of the second side end portion 51 in the second direction and located at a position farthest away from the second side end portion 51 in the circumferential direction. As with the above, the pair of second hinges 72 are disposed at the second fairing piece 50.

As shown in FIG. 1, each first hinge 71 of the rotary structure 70 includes the first movable portion 73 and the first fixing portion 74. The first movable portion 73 is attached to an outer surface of the first fairing piece 40 and serves as a guide pin, and the first fixing portion 74 is fixed to an outer surface of the main body portion 12 of the rocket 11 and guides the guide pin. Similarly, each second hinge 72 includes the second movable portion 75 and the second fixing portion 76.

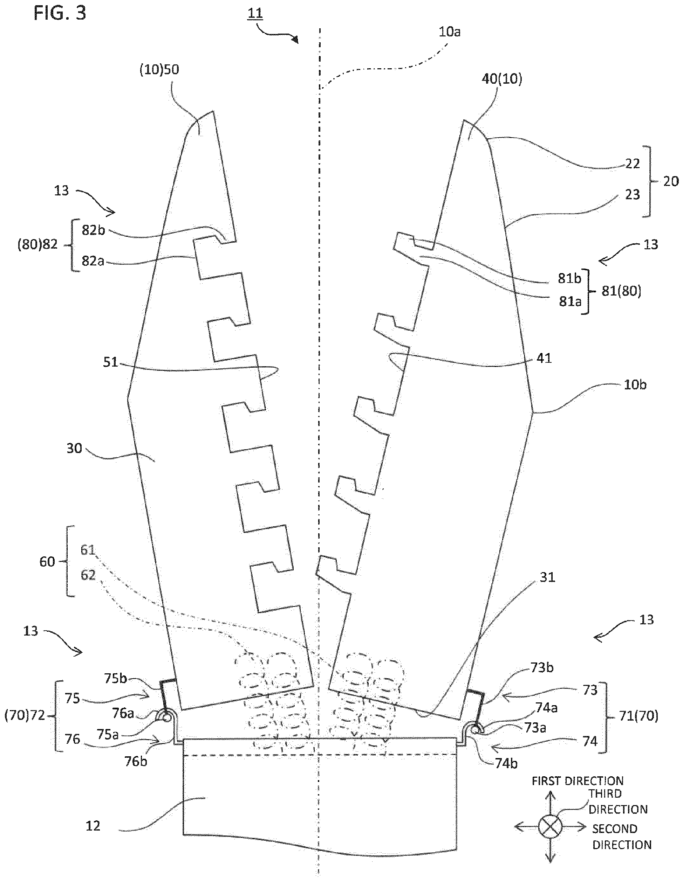

With this, as shown in FIG. 3, the movable portion 73 is guided by the fixing portion 74 by the biasing force of the springs 61, and the movable portion 75 is guided by the fixing portion 76 by the biasing force of the springs 62. As a result, the first fairing piece 40 and the second fairing piece 50 rotate about corresponding hinge shafts, and thus, the fairing 10 opens. Then, when a rotation angle reaches a predetermined angle or more, the movable portions 73 and 75 are detached from the fixing portions 74 and 76, and thus, the first fairing piece 40 and the second fairing piece 50 separate from the rocket 11.

Hereinafter, the configurations the movable portions 73 and 75 and the fixing portions 74 and 76 will be described in detail.

One end of each holding portion 73b of the first movable portion 73 is attached to the outer surface of the first fairing piece 40, and the first pin 73a is attached to the other end of each holding portion 73b. The holding portion 73b between the one end and the other end extends from the first fairing piece 40 toward the main body portion 12 in the first direction. For example, the first pin 73a is formed in a columnar shape having a central axis extending in the third direction. For example, the pair of holding portions 73b are disposed with an interval therebetween in the third direction, and the first pin 73a extends between the pair of holding portions 73b.

One end of the holding portion 74b of the first fixing portion 74 is fixed to the outer surface of the main body portion 12, and the first fitting portion 74a is attached to the other end of the holding portion 74b. The holding portion 74b between the one end and the other end extends from the main body portion 12 toward the first fairing piece 40 in the first direction.

The first fitting portion 74a is curved in an arc shape so as to project toward the fore end portion 21 in the first direction. Moreover, the first fitting portion 74a is open toward an opposite side of the fore end portion 21 (i.e., toward the terminal end portion 31) in the first direction. The first fixing portion 74 is disposed at the interval between the pair of holding portions 73b of the first movable portion 73. The first pin 73a of the first movable portion 73 is fitted to the first fitting portion 74a so as to be attachable and detachable through the opening of the first fitting portion 74a.

There is an interval between the first fitting portion 74a and the first pin 73a in the first direction. Therefore, the first movable portion 73 is movable relative to the first fixing portion 74 in the first direction. Moreover, when the first pin 73a is engaged with the first fitting portion 74a, the first movable portion 73 is rotatable relative to the first fixing portion 74. The first movable portion 73 may be attached to the main body portion 12, and the first fixing portion 74 may be attached to the first fairing piece 40.

One end of each holding portion 75b of the second movable portion 75 is attached to the outer surface of the second fairing piece 50, and the second pin 75a is attached to the other end of each holding portion 75b. The holding portion 75b between the one end and the other end extends from the second fairing piece 50 toward the main body portion 12 in the first direction. For example, the second pin 75a is formed in a columnar shape having a central axis extending in the third direction. For example, the pair of holding portions 75b are disposed with an interval therebetween in the third direction, and the second pin 75a extends between the pair of holding portions 75b.

One end of the holding portion 76b of the second fixing portion 76 is fixed to the outer surface of the main body portion 12, and the second fitting portion 76a is attached to the other end of the holding portion 76b. The holding portion 76b between the one end and the other end extends from the main body portion 12 toward the second fairing piece 50 in the first direction.

The second fitting portion 76a is curved in an arc shape so as to project toward the fore end portion 21 in the first direction. Moreover, the second fitting portion 76a is open toward an opposite side of the fore end portion 21 (i.e., toward the terminal end portion 31) in the first direction. The second fixing portion 76 is disposed at the interval between the pair of holding portions 75b of the second movable portion 75. The second pin 75a of the second movable portion 75 is fitted to the second fitting portion 76a so as to be attachable and detachable through the opening of the second fitting portion 76a.

There is an interval between the second fitting portion 76a and the second pin 75a in the first direction. Therefore, the second movable portion 75 is movable relative to the second fixing portion 76 in the first direction. Moreover, when the second pin 75a is engaged with the second fitting portion 76a, the second movable portion 75 is rotatable relative to the second fixing portion 76. The second movable portion 75 may be attached to the main body portion 12, and the second fixing portion 76 may be attached to the second fairing piece 50.

Moreover, as shown in FIG. 1, when the fairing 10 is attached to the main body portion 12, attaching positions of the second fixing portion 76 and the first fixing portion 74 with respect to the main body portion 12 in the first direction are the same as each other, and attaching positions of the first movable portion 73 and the second movable portion 75 with respect to the fairing 10 in the first direction are the same as each other. In this case, the length of the holding portion 76b is larger than the length of the holding portion 74b. Therefore, an interval between the second pin 75a and the second fitting portion 76a is larger than an interval between the first pin 73a and the first fitting portion 74a. On this account, a distance by which the second fairing piece 50 moves relative to the main body portion 12 until the second pin 75a is fitted to the second fitting portion 76a is longer than a distance by which the first fairing piece 40 moves relative to the main body portion 12 until the first pin 73a is fitted to the first fitting portion 74a.

As above, since the length of the second fixing portion 76 is larger than the length of the first fixing portion 74, a distance of separation of the second fairing piece 50 from the main body portion 12 is longer than a distance of separation of the first fairing piece 40 from the main body portion 12. With this, the engagement between the first fairing piece 40 and the second fairing piece 50 by the joint portions 80 is released, and the fairing pieces are separable.

The joint portions 80 maintain the coupling between the first fairing piece 40 and the second fairing piece 50 before the separation. Specifically, each joint portion 80 is a hook-shaped member in which the first engaging portion 81 of the first fairing piece 40 and the second engaging portion 82 of the second fairing piece 50 are engaged with each other. In the present embodiment, each of the number of first engaging portions 81 and the number of second engaging portions 82 is, for example, ten. The number of first engaging portions 81 and the number of second engaging portions 82 are suitably set in accordance with the size and shape of the fairing 10 and joining force of each joint portion 80. The joint portions 80 are disposed with intervals in the first direction, and each interval may be set to one meter or more and two meters or less from the viewpoint of cost and joining force although it depends on a joining method and a load applied to the fairing 10.

Moreover, the ten joint portions 80 are disposed symmetrically with respect to the central axis 10a of the fairing 10 in the third direction, Therefore, five joint portions 80 are disposed at each of both sides sandwiching the central axis 10a in the third direction. Moreover, the first engaging portions 81 are located at the first side end portion 41 of the first fairing piece 40, and the second engaging portions 82 are located at the second side end portion 51 of the second fairing piece 50.

The first engaging portion 81 has a hook shape and includes, for example, a first projecting portion 81a and a first bent portion 81b. The first projecting portion 81a projects from the first side end portion 41 in the second direction. For example, as the first projecting portion 81a extends away from the first side end portion 41, a dimension thereof in the first direction decreases. For example, one edge of the first projecting portion 81a which edge is located at one side (for example, located closer to the fore end portion 21) in the first direction extends linearly along the second direction, and the other edge of the first projecting portion 81a is inclined toward the fore end portion 21 in the second direction as it extends away from the first side end portion 41.

The first bent portion 81b is located at a fore end of the first projecting portion 81a and is bent relative to the first projecting portion 81a toward the fore end portion 21 in the first direction. Therefore, the first bent portion 81b is located closer to the fore end portion 21 in the first direction than the first projecting portion 81a is. A portion (recess) surrounded by the first side end portion 41, the first projecting portion 81a, and the first bent portion 81b is recessed toward the other side (for example, toward the terminal end portion 31) in the first direction.

The second engaging portion 82 is formed by a cutout portion 82a and an outer peripheral edge of the cutout portion 82a. The cutout portion 82a is recessed from the second side end portion 51 in the second direction, and a deep portion of the cutout portion 82a is bent toward the fore end portion 21 in the first direction.

Therefore, a dimension of the cutout portion 82a in the first direction is small at a side close to the second side end portion 51 and is large at a deep side away from the second side end portion 51. On this account, when the first engaging portion 81 is inserted into the cutout portion 82a, the first projecting portion 81a of the first engaging portions 81 is located in a region where the dimension is small, and the first bent portion 81b of the first engaging portion 81 is inserted into a region where the dimension is large.

Moreover, in the cutout portion 82a, there is a level difference between the region where the dimension in the first direction is small and the region where the dimension in the first direction is large. By this level difference, regarding the outer peripheral edge surrounding the cutout portion 82a in the second fairing piece 50, an outer peripheral edge (second bent portion 82b) close to the fore end portion 21 in the first direction is bent toward the terminal end portion 31 in the first direction so as to extend toward the second side end portion 51 in the second direction. The second bent portion 82b corresponds to the first projecting portion 81a in the first direction and is fitted to the recess of the first engaging portion 81.

Therefore, when the fairing 10 is in the coupled state, the first engaging portion 81 is inserted into the cutout portion 82a of the second engaging portion 82, and the first bent portion 81b of the first engaging portion 81 and the second bent portion 82b of the second engaging portion 82 are lined up in the second direction. With this, the first bent portion 81b is engaged with the second bent portion 82b in second direction, and thus, the first fairing piece 40 and the second fairing piece 50 are joined to each other.

Opposing surfaces of the first bent portion 81b and the second bent portion 82b in the second direction are parallel to the first direction or are inclined in such a direction as to be away from the first side end portion 41 and the second side end portion 51 in the second direction as they extend toward the fore end portion 21 in the first direction. With this, the opposing surfaces are not inclined in such a direction as to approach the first side end portion 41 and the second side end portion 51 as they extend toward an opposite side of the main body portion 12 (i.e., toward the fore end portion 21) in the first direction. Therefore, the first bent portion 81b is not engaged with the second bent portion 82b in the first direction, and thus, the first fairing piece 40 and the second fairing piece 50 are movable relative to each other.

### Operations of Linear Separating Mechanism

First, when launching the rocket 11, the fairing 10 and the main body portion 12 are in the coupled state, and the first fairing piece 40 and the second fairing piece 50 are in a joined state by the joint portions 80. At the time of the launch, force of separating the first fairing piece 40 and the second fairing piece 50 acts on the first fairing piece 40 and the second fairing piece 50, but the joined state is maintained by the joint portions 80.

Then, when the rocket 11 reaches a predetermined altitude (outer space), the bending separating mechanism is controlled by a controller, and with this, the fairing 10 separates from the main body portion 12 in the first direction. In the bending separating mechanism, it is desirable not to use a pyrotechnic system. With this, impact generated by the pyrotechnic system at the time of bending separation is not applied to the payload in the fairing 10 and the main body portion 12.

Next, after a predetermined time has elapsed since the launch of the rocket 11, the first fairing piece 40 and the second fairing piece 50 move away from the main body portion 12 by biasing force of the first springs 61 and the second springs 62 applied in the proceeding direction of the rocket 11. At this time, the distance of separation of the first fairing piece 40 from the main body portion 12 is such a distance that the first pin 73a of the first movable portion 73 located at the first fairing piece 40 reaches such a position as to be engaged with the first fitting portion 74a located at the main body portion 12. Similarly, the distance of separation of the second fairing piece 50 from the main body portion 12 is such a distance that the second pin 75a of the second movable portion 75 reaches such a position as to be engaged with the second fitting portion 76a. Herein, the distance of separation of the second fairing piece 50 from the main body portion 12 is set longer than the distance of separation of the first fairing piece 40 from the main body portion 12. With this, even after the first fairing piece 40 stops moving, the second fairing piece 50 continues to move away from the main body portion 12. As a result, the engagement of the joint portions 80 is released, i.e., hook lock is released.

After the hook is unlocked, the first fairing piece 40 rotates about the first pin 73a, and the second fairing piece 50 rotates about the second pin 75a. With this, the fore end portion 21 of the fairing 10 is open, and the fairing pieces finally separate from the main body portion 12.

The linear separating mechanism 13 will be described in more detail. After the first fairing piece 40 stop moving, the second fairing piece 50 stops moving, and therefore, the second fairing piece 50 moves toward the fore end portion 21 in the first direction farther than the first fairing piece 40 does. With this, the first bent portion 81b of the first fairing piece 40 and the second bent portion 82b of the second fairing piece 50 are displaced relative to each other in the first direction, and thus, the engagement between the first bent portion 81b and the second bent portion 82b is released. With this, the joined state between the first fairing piece 40 and the second fairing piece 50 is released in the second direction.

Then, the curved first fitting portion 74a is supported by the first pin 73a, and the first fairing piece 40 rotates about the first pin 73a by biasing in the first direction by the expansion of the first springs 61. Similarly, the curved second fitting portion 76a is supported by the second pin 75a, and the second fairing piece 50 rotates about the second pin 75a by biasing in the first direction by the expansion of the second springs 62. With this, the first fairing piece 40 and the second fairing piece 50 move away from each other, and thus, the fairing 10 separates.

Then, the first pins 73a are detached through the openings of the first fitting portions 74a, and the first springs 61 are detached from the recesses of the main body portion 12. Thus, the first fairing piece 40 separates from the main body portion 12. The second pins 75a are detached through the openings of the second fitting portions 76a, and the second springs 62 are detached from the recesses of the main body portion 12. Thus, the second fairing piece 50 separates from the main body portion 12.

In the fairing 10 according to the present embodiment configured as above, the linear separating mechanism 13 includes the biasing structure 60, the rotary structure 70, the first engaging portions 81, and the second engaging portions 82. With this, the first fairing piece 40 and the second fairing piece 50 are moved in the first direction by the biasing structure 60, and the first fairing piece 40 and the second fairing piece 50 are stopped by the rotary structure 70 such that the movement distance of the first fairing piece 40 with respect to the main body portion 12 in the first direction and the movement distance of the second fairing piece 50 with respect to the main body portion 12 in the first direction are different from each other. With this, the engagement between the first engaging portion 81 and the second engaging portion 82 is released, and the first fairing piece 40 and the second fairing piece 50 separate from each other. Since the pyrotechnic system is not used, shock generated at the time of the separation can be reduced.

Moreover, the first engaging portion 81 is engaged with the second engaging portion 82, and therefore, the movement of the first engaging portion 81 relative to the second engaging portion 82 in the second direction is restricted. From this coupled state, the second fairing piece 50 moves in the first direction farther than the first fairing piece 40 does. With this, the first engaging portion 81 is disengaged from the second engaging portion 82, and therefore, the first fairing piece 40 and the second fairing piece 50 can move relative to each other in the second direction. On this account, the first fairing piece 40 and the second fairing piece 50 can separate from each other without using the pyrotechnic system.

Moreover, the second engaging portion 82 is formed in a hook shape that is bent in a direction opposite to a direction in which the first engaging portion 81 is bent in the first direction. With this, the first engaging portion 81 can be engaged with the second engaging portion 82 so as to be separable from the second engaging portion 82 in the second direction.

Moreover, the opposing surfaces of the first bent portion 81b and the second bent portion 82b are not inclined in such a direction as to approach the first side end portion 41 and the second side end portion 51 as they extend toward the fore end portion 21 in the first direction. Therefore, the first bent portion 81b and the second bent portion 82b are not engaged with each other in the first direction. On this account, the second fairing piece 50 moves relative to the first fairing piece 40, and the engagement between the first bent portion 81b and the second bent portion 82b can be released.

Moreover, in the third direction, the first engaging portions 81 are located symmetrically with respect to the central axis 10a of the fairing 10. With this, the first fairing piece 40 and the second fairing piece 50 can be uniformly joined to each other.

### Modified Example 1

Regarding the first engaging portions 81 lined up along the first side end portion 41, an interval between two adjacent first engaging portions 81 that are located closer to the inflection point 10b may be narrower. The inflection point 10b is a position at which the inclination angle of the fairing 10, extending toward the main body portion 12 in the first direction, to the central axis 10a becomes small. For example, the inflection point 10b is located between the head portion 20 and the body portion 30.

To be specific, while the rocket 11 is flying in the first direction, air flows along the head portion 20 toward the body portion 30 and comes off at the inflection point 10b. With this, air pressure becomes low at a side of the inflection point 10b which side is close to the body portion 30, and therefore, force that separates the first fairing piece 40 and the second fairing piece 50 acts. However, since the number of first engaging portions 81 becomes larger at a position closer to the inflection point 10b, load resistance in the vicinity of the inflection point 10b is high, and the first fairing piece 40 and the second fairing piece 50 can be prevented from separating.

### Modified Example 2

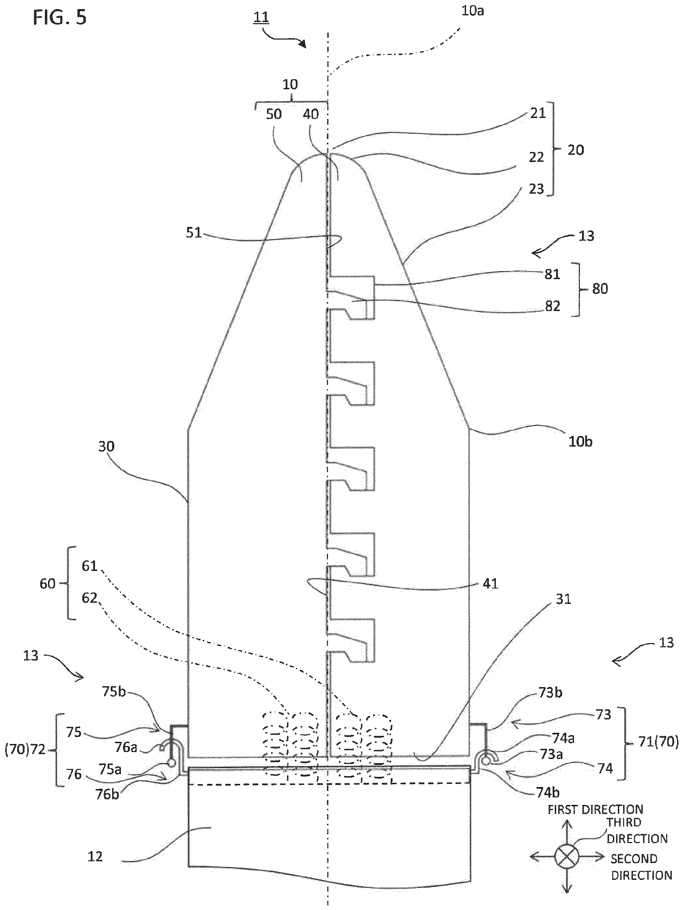

In the above configuration, the first engaging portions 81 each having a hook shape projecting from the first side end portion 41 and bent toward the fore end portion 21 in the first direction are formed at the first fairing piece 40. However, the shape of the joint portion 80 is not limited to this. For example, as shown in FIG. 5, the second engaging portions 82 each having a hook shape projecting from the second side end portion 51 and bent toward an opposite side of the fore end portion 21 in the first direction may be formed at the second fairing piece 50. In this case, each of the first engaging portions 81 may be formed by a cutout portion into which the second engaging portion 82 is inserted; and an outer peripheral edge of the cutout portion, the second engaging portion 82 being engaged with the outer peripheral edge.

Or, the shape of the second engaging portion 82 is not limited to a cutout shape as long as the engagement between the first engaging portion 81 and the second engaging portion 82 is released since the second fairing piece 50 separates from the main body portion 12 farther than the first fairing piece 40 does. For example, the second engaging portion 82 may be a hole.

The above embodiments may be combined with each other as long as they do not exclude each other. From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention.

### Industrial Applicability

The nose fairing of the present disclosure is useful as, for example, a nose fairing capable of reducing shock generated at the time of separation.

### Reference Signs List

- 10: nose fairing
- 10a: central axis
- 11: rocket
- 12: main body portion
- 13: linear separating mechanism (separating mechanism)
- 10b: inflection point
- 40: first fairing piece (fairing piece)
- 41: first side end portion (side end portion)
- 50: second fairing piece (fairing piece)
- 51: second side end portion (side end portion)
- 60: biasing structure
- 61: first spring (biasing structure)
- 62: second spring (biasing structure)
- 70: rotary structure
- 71: first hinge (rotary structure)
- 72: second hinge (rotary structure)
- 81: first engaging portion
- 81b: first bent portion
- 82: second engaging portion
- 82b: second bent portion

## Claims

1. A nose fairing coupled to a main body portion of a rocket so as to be separable from the main body portion,
the nose fairing comprising:
a pair of fairing pieces that are separable after a predetermined time has elapsed since the rocket is launched, the pair of fairing pieces being engaged with each other and maintained in a coupled state before the pair of fairing pieces separate;
a biasing structure that biases the fairing pieces in a proceeding direction of the rocket to separate the fairing pieces from the main body portion; and
a separating mechanism that releases the engagement between the pair of fairing pieces and separates the pair of fairing pieces in such a manner that a distance of separation of one of the pair of fairing pieces from the main body portion is made longer than a distance of separation of the other of the pair of fairing pieces from the main body portion.

2. The nose fairing according to claim 1, wherein the separating mechanism includes a rotary structure that rotates the pair of fairing pieces about corresponding hinge shafts to open and separate the pair of fairing pieces after the pair of fairing pieces receive biasing force from the biasing structure to separate from the main body portion in the proceeding direction.

3. The nose fairing according to claim 1 or 2, wherein:
one of the pair of fairing pieces includes first engaging portions at a side end portion thereof, the first engaging portions each having a hook shape that is bent in the proceeding direction; and
the other of the pair of fairing pieces includes second engaging portions at a side end portion thereof, the first engaging portions being engaged with the second engaging portions.

4. The nose fairing according to claim 3, wherein when one of the pair of fairing pieces moves relative to the other of the pair of fairing pieces in the proceeding direction from a state where the first engaging portions are engaged with the second engaging portions and are therefore restricted from moving relative to the second engaging portions in an orthogonal direction orthogonal to the proceeding direction, the first engaging portions are disengaged from the second engaging portions and are therefore movable relative to the second engaging portions in the orthogonal direction.

5. The nose fairing according to claim 3 or 4, wherein:
in a sectional shape of the nose fairing in a side view, the nose fairing includes an inflection point at which an inclination angle of the nose fairing to the proceeding direction becomes small toward the main body portion; and
an interval between adjacent two of the first engaging portions lined up along the side end portion of the fairing piece becomes narrower as the adjacent two of the first engaging portions are located closer to the inflection point.

6. The nose fairing according to any one of claims 3 to 5, wherein each of the second engaging portions has a hook shape that is bent in a direction opposite to a direction in which the first engaging portion is bent along the proceeding direction.

7. The nose fairing according to claim 6, wherein:
each of the first engaging portions includes a first bent portion that is bent toward one side in the proceeding direction;
each of the second engaging portions includes a second bent portion that is bent toward the other side in the proceeding direction; and
a surface of the first bent portion which surface is opposed to the second bent portion is not inclined so as to approach the side end portion as the surface of the first bent portion extends toward an opposite side of the main body portion in the proceeding direction.

8. The nose fairing according to any one of claims 3 to 7, wherein the first engaging portions are located symmetrically with respect to a central axis of the nose fairing.
